(19) Europäisches Patentamt

European Patent Office

Office européen des brevets

(11) Veröffentlichungsnummer: **0 485 770 A1**

# (12) EUROPÄISCHE PATENTANMELDUNG

(21) Anmeldenummer: **91118038.8**

(22) Anmeldetag: **23.10.91**

(51) Int. Cl.5: **B60J 1/02**, B60J 10/02

(30) Priorität: **14.11.90 DE 4036148**

(43) Veröffentlichungstag der Anmeldung:
**20.05.92 Patentblatt 92/21**

(84) Benannte Vertragsstaaten:
**AT BE CH DE DK ES FR GB GR IT LI LU NL SE**

(71) Anmelder: **GUMMI-HENNIGES GmbH & CO.
KG.
Hildesheimer Strasse 410
W-3000 Hannover 89(DE)**

(72) Erfinder: **Leistner, Rolf
Rambertweg 13
W-8000 München 50(DE)**
Erfinder: **Anders, Herbert
Brunnenstrasse 20
W-3056 Rehburg-Loccum 1(DE)**

(74) Vertreter: **Wehser, Wulf, Dipl.-Ing. et al
Patentanwälte Wehser und Partner
Roscherstrasse 12
W-3000 Hannover 1(DE)**

(54) **Isolierglasscheibe für Kraftfahrzeuge und Verfahren zu ihrer Herstellung.**

(57) Eine Isolierglasscheibe für Kraftfahrzeuge, die aus zwei im Abstand zueinander angeordneten Glasscheiben besteht, wobei der Abstand mittels eines im Randbereich der Scheiben umlaufenden Abdichtrahmens aufrechterhalten wird und wobei zwischen die Scheiben trockene Luft unter Normaldruck eingeführt ist, deren Trockenheitsgrad durch im Bereich des Abdichtrahmens angeordnete Trocknungsmittel aufrechterhalten wird, soll so ausgebildet werden, daß sie sich in einfacher Weise herstellen läßt, ohne ihre Funktionsfähigkeit zu beeinträchtigen.

Hierzu ist erfindungsgemäß vorgesehen, daß zwischen die beiden Glasscheiben ein vorgefertigter formbeständiger Rahmen (Formrahmen) aus Gummi oder gummiähnlichem Kunststoff eingelegt ist, und daß nach dem Aufeinanderlegen der beiden Glasscheiben eine den gesamten Rand der Isolierglasscheibe umfassende Umspritzung vorgesehen ist, welche die beiden Glasscheiben zusammenhält und gleichzeitig den Formrahmen unter Vorspannung setzt, so daß eine dichte Kapselung erzeugt wird.

Fig. 1

Die Erfindung betrifft eine Isolierglasscheibe für Kraftfahrzeuge, die aus zwei im Abstand zueinander angeordneten Glasscheiben besteht, wobei der Abstand mittels eines im Randbereich der Scheiben umlaufenden Abdichtrahmens aufrechterhalten wird und wobei zwischen die Scheiben trockene Luft unter Normaldruck eingeführt ist, deren Trokkenheitsgrad durch im Bereich des Abdichtrahmens angeordnete Trocknungsmittel aufrechterhalten wird.

Bei einer bekannten Anordnung dieser Art besteht der Abdichtrahmen aus einer Schnur, die im Randbereich der Glasscheiben auf diese gelegt wird, wobei die Schnur entsprechend der Außenform der Fensterscheibe gekrümmt und/oder geknickt werden muß. Ist die Schnur gegebenenfalls unter Zuhilfenahme einer Schablone aufgebracht, wird die zweite Glasscheibe aufgelegt und damit die Schnur in ihrer Relativlage zu beiden Glasscheiben fixiert. Anschließend wird im äußeren Umfang der Glasscheibe der offene Rahmenabschnitt zwischen Schnur und Glasscheibenkante mit einem Elastomer vergossen, welches der Verbindung der beiden Glasscheiben dient. Die eigentliche Abdichtung wird hier von der Schnur übernommen, die aus Butyl besteht, welches gasdicht und rein ist.

Nachteilig bei dieser bekannten Anordnung ist es, daß einerseits das Auflegen der Schnur schwierig und zeitraubend ist, daß andererseits der Verguß einen zusätzlichen Arbeitsgang darstellt und daß schließlich zusätzliche Mittel für eine Halterung einer so gebildeten Isolierglasscheibe aufgebracht werden müssen. Diese können als Träger unmittelbar an der Glasscheibe angreifen, aber auch aus an die Glasscheibe angespritzten Teilen bestehen.

Der Erfindung liegt demgemäß die Aufgabe zugrunde, eine Isolierglasscheibe der eingangs genannten Art so auszubilden, daß sie sich in einfacher Weise herstellen läßt, ohne ihre Funktionsfähigkeit zu beeinträchtigen.

Diese Aufgabe wird erfindungsgemäß dadurch gelöst,daß zwischen die beiden Glasscheiben ein vorgefertigter formbeständiger Rahmen (Formrahmen) aus Gummi oder gummiähnlichem Kunststoff eingelegt ist, und daß nach dem Aufeinanderlegen der beiden Glasscheiben eine den gesamten Rand der Isolierglasscheibe umfassende Umspritzung vorgesehen ist, welche die beiden Glasscheiben zusammenhält und gleichzeitig den Formrahmen unter Vorspannung setzt, so daß eine dichte Kapselung erzeugt wird.

Mit dieser Anordnung und diesem Verfahren wird erreicht, daß wenigstens ein Arbeitsgang, nämlich derjenige des nachträglichen Vergusses der Abdichtung zwischen den beiden Scheiben in deren Randbereichen entfallen kann, da bei der erfindungsgemäßen Anordnung dieser Arbeitsgang von dem Umspritzvorgang mit übernommen wird.

Außerdem läßt sich ein vorgefertigter Rahmen in bestimmter Form um ein Vielfaches leichter einsetzen bzw. einlegen als eine Schnur, die der Kontur der Glasscheiben erst folgen muß.

Die erfindungsgemäße Isolierglasscheibe ist also schneller und billiger produzierbar als die bekannte Scheibe.

Vorzugsweise besteht der Formrahmen aus einem Elastomer, insbesondere aus einem Äthylenpropylendienmonomer.

Wie Versuche ergeben haben, reicht es in der Regel aus, wenn der Formrahmen zwischen den beiden Glasscheiben lediglich unter Vorspannung gesetzt wird, so daß er durch diese gehalten wird. Einer besonderen Haftung durch Verklebung oder dergleichen bedarf es daher in der Regel nicht. Ist diese jedoch erwünscht, dann kann die Haftung durch Verwendung eines Klebers in Form eines Primers für das Glas bzw. eines Haftvermittlers für den Gummi des Formrahmens verbessert werden. Hierbei reicht es aber in aller Regel aus, wenn der Formrahmen nur auf einer Seite mit der ihm dort zugewandten Glasscheibe durch einen Kleber, einen Primer oder dergleichen verbunden ist.

Als Primer kommt ein in organischen Lösungsmitteln gelöstes Gemisch aus Silanen und Harzen und als Haftmittel in organischen Lösungsmitteln gelöste Polymere, Vernetzer und dispergierte Feststoffe in Betracht.

Für das Umspritzen wird zweckmäßigerweise ebenfalls ein EPDM verwendet, wobei im Randbereich der beiden Glasscheiben zwischen dem Formrahmen und den äußeren Kanten der Glasscheiben ein Raum offenbleibt, in welchen das Umspritzmaterial eintreten kann. Das Umspritzmaterial übernimmt damit gleichzeitig die Aufgaben eines äußeren Rahmens, mit welchem die Isolierglasscheibe in das Kraftfahrzeug eingesetzt und/oder an diesem befestigt werden kann.

Besonders zweckmäßig ist es, wenn der Formrahmen einen nach innen offenen Hohlraum zur Aufnahme eines hygroskopischen Mittels, also eines Trocknungsmittels, aufweist. Dieser Hohlraum ist zweckmäßigerweise in dem in der Einbaulage unten liegenden Abschnitt des Formrahmens angebracht, damit im Benutzungszustand das Trocknungsmittel, welches die Form von kleinen Kugeln oder Stäbchen haben kann, nicht zwischen die Scheiben austreten kann.

Der Hohlraum ist zweckmäßigerweise so bemessen, daß das Trocknungsmittel einreihig in diesem untergebracht werden kann.

Als Trocknungsmittel dient zweckmäßigerweise Kalium-Alumosilikat.

Besonders vorteilhaft ist es weiter, wenn der Formrahmen an seiner nach außen weisenden umlaufenden Kante mit einer Einkerbung versehen ist, deren Begrenzungskanten im Schnitt etwa V-förmig verlaufen, und in welche das Umspritzmaterial während des Umspritzvorganges eintritt. Durch die V-förmige Einkerbung werden nämlich zwei Lippen gebildet, die gegen die Glasflächen während des Umspritzvorganges aufgespreizt werden. Damit ist in besonders einfacher Weise sichergestellt, daß die so gebildeten Lippen abdichtend an den Glasflächen anliegen, so daß das Umspritzmaterial nicht an dem Formrahmen vorbei zwischen die Glasscheiben gelangen kann. Das Umspritzen erfolgt nämlich mit nicht unerheblichen Drücken in der Größenordnung von etwa 100 bar und ein Eindringen des Materials zwischen die Glasscheiben würde die gesamte Isolierscheibe unbrauchbar machen.

Bei einem Verfahren zur Herstellung der erfindungsgemäßen Isolierglasscheibe werden also zwei Glasscheiben unter Zwischenschaltung eines weitgehend formstabilen Rahmens aus Gummi oder gummiähnlichem Kunststoff aufeinandergelegt und in diesem Zustand umspritzt, wobei das Umspritzmaterial einerseits die Glasscheiben gegen den Formrahmen gedrückt abdichtend zusammenhält und andererseits gleichzeitig die Halterung für diese kombinierte Isolierglasscheibe bildet.

Die Erfindung wird im folgenden anhand eines Ausführungsbeispieles in der Zeichnung näher erläutert.

Fig. 1 zeigt in schematischer Darstellung in Ansicht eine Isolierglasscheibe für Kraftfahrzeuge auf welche die Erfindung Anwendung findet.

Fig. 2 ist der Schnitt II-II nach Fig. 1.

Fig. 3 zeigt in perspektivischer Darstellung den die beiden Scheiben verbindenden Formrahmen.

Fig. 4 ist der Schnitt IV-IV nach Fig. 3.

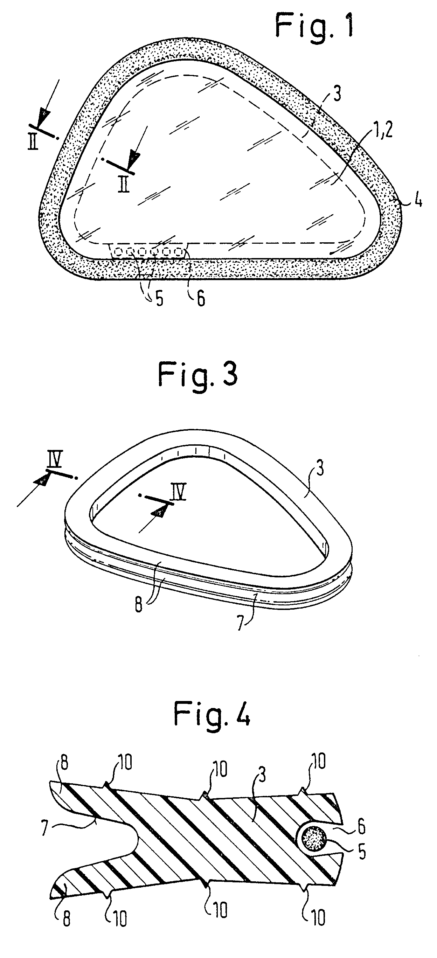

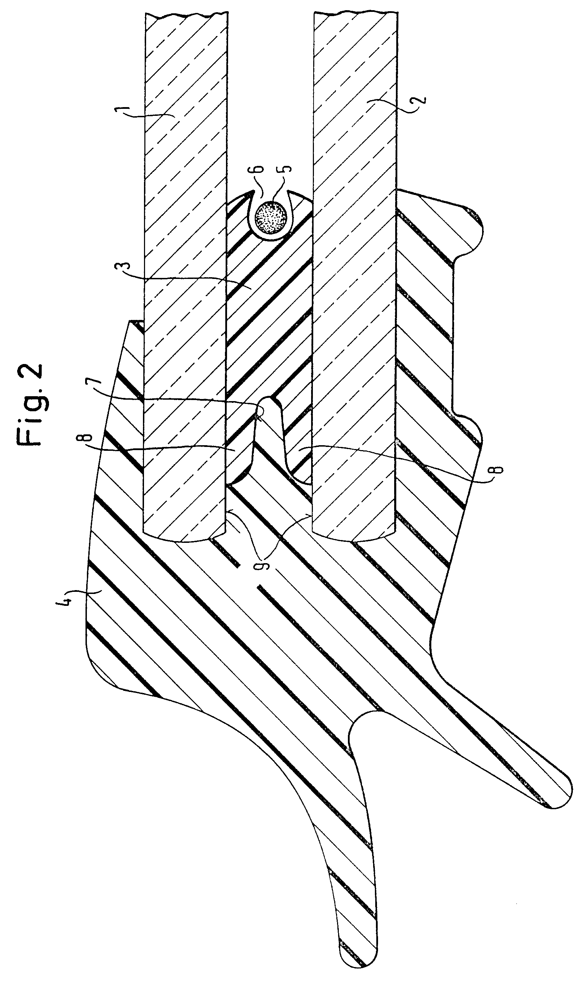

Gemäß den Figuren 1 und 2 besteht die erfindungsgemäße Isolierglasscheibe aus zwei Glasscheiben 1 und 2 (vergl. Fig. 2) zwischen denen ein umlaufender Formrahmen 3 angeordnet ist, der aus einem EPDM bestehen kann und als Distanzrahmen dient.

Der Formrahmen 3 ist von einer den gesamten Rand der Isolierglasscheibe umfassenden Umspritzung 4 abgedeckt, welche die beiden Glasscheiben 1 und 2 zusammenhält und gleichzeitig den Formrahmen unter Vorspannung setzt, so daß eine dichte Kapselung erzeugt wird.

Die Umspritzung kann ebenfalls aus einem Elastomer bestehen.

Wie in den Figuren 1 und 2 weiter angedeutet, kann ein Trocknungsmittel in Form von kleinen Kugeln 5[*)]in einen Hohlraum 6 des Formrahmens 3 eingebracht werden, wobei der Hohlraum 6 nach innen offen ist und sich, wie in Figur 1 dargestellt, in der Einbaulage unten befindet, damit das Trocknungsmittel nicht zwischen die beiden Scheiben 1 und 2 austritt.

Der Hohlraum 6 ist hierbei so bemessen, daß das Trocknungsmittel, wie in Figur 1 dargestellt, einreihig in diesem untergebracht werden kann.

Wie aus Figur 2 weiter hervorgeht, ist der Formrahmen 3 an seiner nach außen weisenden umlaufenden Kante mit einer V-förmigen Einkerbung 7 (vergl. auch Fig. 3) versehen, wobei in die Einkerbung 7 das Umspritzmaterial während des Umspritzvorganges eintritt.

Die perspektivische Darstellung gemäß Figur 3, sowie der Schnitt gemäß Figur 4 verdeutlichen diese Verhältnisse.

Wie aus Figur 4 hervorgeht, werden durch die V-förmige Einkerbung 7 zwei Lippen 8 gebildet, die gegen die Flächen der beiden Glasscheiben 1 und 2 während des Umspritzvorganges aufgespreizt werden. Damit liegen die Lippen 8 abdichtend an den Glasflächen an (vergl. Fig. 2).

Zur Herstellung der erfindungsgemäßen Isolierglasscheibe werden also zwei Glasscheiben 1 und 2, unter Zwischenschaltung eines weitgehend formstabilen Rahmens 3 aus Gummi oder gummiähnlichem Kunststoff, aufeinander gelegt und in diesem Zustand mit einer Umspritzung 4 versehen, wobei das Umspritzmaterial einerseits die Glasscheiben 1 und 2 gegen den Formrahmen 3 gedrückt, abdichtend zusammenhält und andererseits gleichzeitig die Halterung für die kombinierte Isolierglasscheibe bildet.

Der Formrahmen 3 kann unter seinen beiden den jeweiligen Glasscheiben zugewandten Seiten zusätzlich mit Rippen 10 versehen sein, die einerseits dem Toleranzausgleich dienen und andererseits aufgrund der erhöhten spezifischen Flächenpressung bei ihrem Zusammendrücken die Abdichtung verbessern.

**Patentansprüche**

1. Isolierglasscheibe für Kraftfahrzeuge, die aus zwei im Abstand zueinander angeordneten Glasscheiben besteht, wobei der Abstand mittels eines im Randbereich der Scheiben umlaufenden Abdichtrahmens aufrechterhalten wird und wobei zwischen die Scheiben trockene Luft unter Normaldruck eingeführt ist, deren Trockenheitsgrad durch im Bereich des Abdichtrahmens angeordnete Trocknungsmittel aufrechterhalten wird, dadurch gekennzeichnet, daß zwischen die beiden Glasscheiben (1,2) ein vorgefertigter formbeständiger Rahmen (3) (Formrahmen) aus Gummi oder gummiähnlichem Kunststoff eingelegt ist, und daß nach

*) oder Stäbchen

dem Aufeinanderlegen der beiden Glasscheiben (1,2) eine den gesamten Rand der Isolierglasscheibe umfassende Umspritzung (4) vorgesehen ist, welche die beiden Glasscheiben (1,2) zusammenhält und gleichzeitig den Formrahmen (3) unter Vorspannung setzt.

2.   Isolierglasscheibe nach Anspruch 1, dadurch gekennzeichnet, daß der Formrahmen (3) aus einem Elastomer besteht.

3.   Isolierglasscheibe nach Anspruch 2, dadurch gekennzeichnet, daß der Formrahmen (3) aus einem Äthylenpropylendienmonomer besteht.

4.   Isolierglasscheibe nach einem der vorhergehenden Ansprüche, dadurch gekennzeichnet, daß die Haftung zwischen den Glasscheiben (1,2) und dem Formrahmen (3) durch Verwendung eines Klebers in Form eines Primers für das Glas bzw. eines Haftvermittlers für den Gummi des Formrahmens (3) verbessert wird.

5.   Isolierglasscheibe nach Anspruch 4, dadurch gekennzeichnet, daß der Formrahmen (3) nur auf einer Seite mit der ihm dort zugewandten Glasscheibe (1,2) durch einen Kleber, einen Primer oder dergleichen verbunden ist.

6.   Isolierglasscheibe nach Anspruch 4 oder 5, dadurch gekennzeichnet, daß als Primer ein in organischen Lösungsmitteln gelöstes Gemisch aus Silanen und Harzen verwendet wird.

7.   Isolierglasscheibe nach einem der Ansprüche 4 bis 6, dadurch gekennzeichnet, daß als Haftmittel in organischen Lösungsmitteln gelöste Polymere, Vernetzer und dispergierte Feststoffe verwendet werden.

8.   Isolierglasscheibe nach einem der vorhergehenden Ansprüche, dadurch gekennzeichnet, daß für das Umspritzen ebenfalls ein EPDM-Elastomer verwendet wird.

9.   Isolierglasscheibe nach einem der vorhergehenden Ansprüche, dadurch gekennzeichnet, daß im Randbereich der beiden Glasscheiben (1,2) zwischen dem Formrahmen (3) und den äußeren Kanten der Glasscheiben (1,2) ein Raum (9) offen bleibt, in welchen das Umspritzmaterial (4) eintreten kann.

10.   Isolierglasscheibe nach einem der vorhergehenden Ansprüche, dadurch gekennzeichnet, daß das Umspritzmaterial (4) den äußeren Rahmen bildet,mit welchem die Isolierglasscheibe in das Kraftfahrzeug eingesetzt und/oder an diesem befestigt wird.

11.   Isolierglasscheibe nach einem der vorhergehenden Ansprüche, dadurch gekennzeichnet, daß der Formrahmen (3) einen nach innen offenen Hohlraum (6) zur Aufnahme eines hygroskopischen Mittels (5), also eines Trocknungsmittels, aufweist.

12.   Isolierglasscheibe nach Anspruch 11, dadurch gekennzeichnet, daß der Hohlraum (6) in dem in der Einbaulage unten liegenden Abschnitt des Formrahmens (3) angebracht ist.

13.   Isolierglasscheibe nach Anspruch 11 oder 12, dadurch gekennzeichnet, daß der Hohlraum (6) so bemessen ist, daß das Trocknungsmittel (5) einreihig in diesem untergebracht werden kann.

14.   Isolierglasscheibe nach einem der Ansprüche 11 bis 13, dadurch gekennzeichnet, daß als Trocknungsmittel Kalium-Alumosilikat dient.

15.   Isolierglasscheibe nach einem der vorhergehenden Ansprüche, dadurch gekennzeichnet, daß der Formrahmen (3) an seiner nach außen weisenden umlaufenden Kante mit einer Einkerbung (7) versehen ist, deren Begrenzungskanten im Schnitt etwa V-förmig verlaufen, und in welche das Umspritzmaterial (4) während des Umspritzvorganges eintritt.

16.   Isolierglasscheibe nach einem der vorhergehenden Ansprüche, dadurch gekennzeichnet, daß das Umspritzen mit Drücken in der Größenordnung von etwa 100 bar vorgenommen wird.

17.   Verfahren zur Herstellung einer Isolierglasscheibe nach einem der vorhergehenden Ansprüche, dadurch gekennzeichnet, daß zwei Glasscheiben (1,2) unter Zwischenschaltung eines weitgehend formstabilen Rahmens (3) aus Gummi oder gummiähnlichem Kunststoff aufeinandergelegt und in diesem Zustand umspritzt werden, wobei das Umspritzmaterial (4) einerseits die Glasscheiben (1,2) gegen den Formrahmen (3) gedrückt abdichtend zusammenhält und andererseits gleichzeitig die Halterung für die kombinierte Isolierglasscheibe bildet.

18. Isolierglasscheibe nach einem der vorhergehenden Ansprüche, dadurch gekennzeichnet, daß eine oder beide Scheiben aus einem durchsichtigen Kunststoff bestehen.

19. Isolierglasscheibe nach Anspruch 18, dadurch gekennzeichnet, daß der durchsichtige Kunststoff ein Polykarbonat ist.

Fig. 1

3

1,2

4

5 6

Fig. 3

3

8

7

Fig. 4

8 10 10 3 10

7

6

5

8 10 10 10

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-1 268 613 (RENON) <br> * das ganze Dokument * | 1,11-14 | B60J1/02 <br> B60J10/02 |
| A | | 2,3,10, 17 | |
| | --- | | |
| A | EP-A-0 307 280 (VEGLA) <br><br> * Spalte 2, Zeile 37 - Spalte 4, Zeile 55; Abbildung 2 * | 1-4,11, 14 | |
| | --- | | |
| A | EP-A-0 145 354 (SHELLER-GLOBE) <br> * Seite 6, Zeile 4 - Zeile 13; Abbildung 8 * | 1,8,9,15 | |
| | --- | | |
| A | EP-A-0 163 194 (METZELER) <br> * Seite 3, Zeile 25 - Zeile 32; Abbildung 3 * | 5,6 | |
| | ----- | | |

**RECHERCHIERTE SACHGEBIETE (Int. Cl.5 )**

B60J
E06B

Der vorliegende Recherchenbericht wurde für alle Patentansprüche erstellt

| Recherchenort | Abschlußdatum der Recherche | Prüfer |
|---|---|---|
| DEN HAAG | 13 FEBRUAR 1992 | FOGLIA A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...............................................................................
& : Mitglied der gleichen Patentfamilie, übereinstimmendes
    Dokument

EPO FORM 1503 03.82 (P0403)